# FASCICULE DE BREVET EUROPEEN

(11) **EP 1 854 648 B1**
(45) Date de publication et mention de la délivrance du brevet: **13.08.2008**
(21) Numéro de dépôt: 07300964.9
(22) Date de dépôt: 19.04.2007
(51) Int. Cl.: B60J 5/14

(54) **Rideau coulissant à lamelles pour véhicule**
Lamellenrollläden für Fahrzeuge
Sliding slat curtain for a vehicle

(30) Priorité: 10.05.2006 FR 0604143
(43) Date de publication de la demande: 14.11.2007
(73) Titulaire: RENAULT S.A.S., 92100 Boulogne Billancourt (FR)
(72) Inventeur: Michelin, Didier, 78950, Gambais (FR)

(56) Documents cités:
- EP-A- 0 149 692
- EP-A- 1 145 885
- FR-A1- 2 782 677

## Description

La présente invention concerne des pièces de carrosserie et notamment des rideaux coulissant à lamelles pour véhicule.

Il a déjà été proposé des rideaux à lamelles pour des véhicules automobiles, notamment de type « camion-fourgon ».

Les documents EP 1 145 885 et EP 0 149 692, décrit en un dispositif de porte escamotable pour véhicule comportant un secteur de cargaison. Cette porte escamotable comporte un membre flexible de porte coulissant entre des positions ouverte et fermée dans des rails de guidage opposés. Pour accéder au secteur de cargaison lorsque le membre flexible de porte est en position fermée, l'utilisateur actionne des moyens d'ouverture de la porte escamotable et fait coulisser le membre flexible de porte jusqu'à la position ouverte.

Cette porte escamotable présente de nombreux avantages, en particulier du fait de son encombrement réduit en position ouverte.

Néanmoins, ce type de porte escamotable présente de nombreux inconvénients.

Un premier inconvénient de ce type de porte escamotable concerne l'usure prématurée du joint d'étanchéité situé sur l'ouverture du véhicule utilitaire.

En effet, les frottements entre le joint d'étanchéité du véhicule et la porte escamotable lors du coulissement de la porte de la position ouverte à la position fermée et vice versa entraînent une dégradation précoce du joint d'étanchéité.

Un second inconvénient de ce type de porte escamotable concerne la difficulté de rendre la porte inviolable.

Un but de la présente invention est de fournir un dispositif de rideau à lamelles permettant de pallier au moins l'un des inconvénients précités.

A cet effet on prévoit selon l'invention une carrosserie de véhicule comprenant un rideau à lamelles, des moyens de support du rideau, et des moyens de guidage du rideau entre une position ouverte et une position fermée, dans laquelle les moyens de guidage comprennent une branche principale et une pluralité de branches secondaires, les moyens de support coopérant avec les branches secondaires en position fermée et avec la branche principale en position ouverte, et la carrosserie de véhicule comprend en outre des moyens d'aiguillage liés à pivotement aux moyens de guidage pour aiguiller les moyens de support vers la branche principale ou vers les branches secondaires.

Cet agencement permet au rideau à lamelles de se déplacer à translation suivant une direction non parallèle au plan dans lequel est situé le rideau en position fermée. Dans la suite, on appellera ce plan le « plan en position fermé ».

L'ouverture et la fermeture du rideau lamellaire se font en deux mouvements. Lors de l'ouverture, le rideau effectue tout d'abord un mouvement de translation pour se décoller du joint d'étanchéité, puis un mouvement de coulissement pour passer dans la position d'ouverture. Lors de la fermeture, le rideau effectue tout d'abord un mouvement de coulissement, puis un mouvement de translation pour passer dans la position fermée.

Ceci permet d'éviter l'usure prématurée du joint d'étanchéité situé autour de l'ouverture du véhicule, et de réduire les risques de violation, contrairement aux dispositifs de l'art antérieur.

Des avantages de la carrosserie de véhicule selon l'invention sont les suivants :
-
- la carrosserie de véhicule comprend en outre des moyens de commande pour commander le déplacement des moyens d'aiguillage entre une deuxième position où les moyens de support sont aiguillés vers la branche principale et une première position où les moyens de support sont aiguillés vers les branches secondaires,
- chaque moyen de support coopère avec une branche secondaire respective en position fermée,
- la carrosserie de véhicule comprend en outre une came apte à coopérer avec les moyens de commande en position fermée,
- la came est fixée aux moyens de support de la lamelle du rideau la plus basse lorsque le rideau est en position fermée,
- les moyens de support comprennent respectivement au moins un galet,
- les moyens d'aiguillage comprennent des volets d'aiguillage, et les moyens de commande comprennent un volet de commande,
- le volet de commande est solidaire d'au moins un des volets d'aiguillage,
- les moyens de guidage comprennent deux rails de guidage opposés le long desquels le rideau est apte à se déplacer,
- chaque lamelle du rideau est fixée à au moins un moyen de support respectif.

D'autres caractéristiques et avantages de l'invention ressortiront encore de la description qui suit, laquelle est purement illustrative et non limitative et doit être lue en regard des dessins annexés, sur lesquels :
- La figure 1 est une vue en élévation de l'arrière d'une carrosserie de véhicule de type utilitaire selon l'invention ;
- La figure 2 est une vue en perspective du véhicule de la figure 1 ;
- La figure 3 est un schéma en vue de côté du véhicule de la figure 1;
- La figure 4 illustre une variante en vue de côté du véhicule de la figure 1 ;
- La figure 5 illustre le principe d'articulation et de guidage de deux lamelles d'un rideau de carrosserie selon l'invention, les lamelles étant représentées schématiquement, en éclaté ;
- Les figures 6, 7 et 8 sont trois vues en perspective de l'arrière du véhicule de la figure 1 ;
- Les figures 9 à 17 illustrent un mode de réalisation de la carrosserie de véhicule selon l'invention.

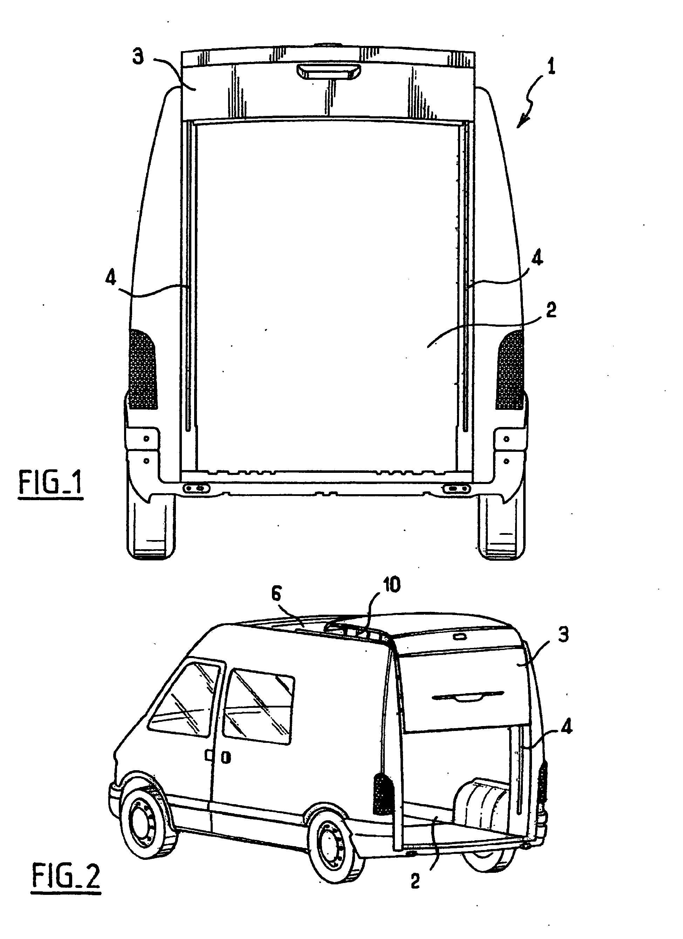

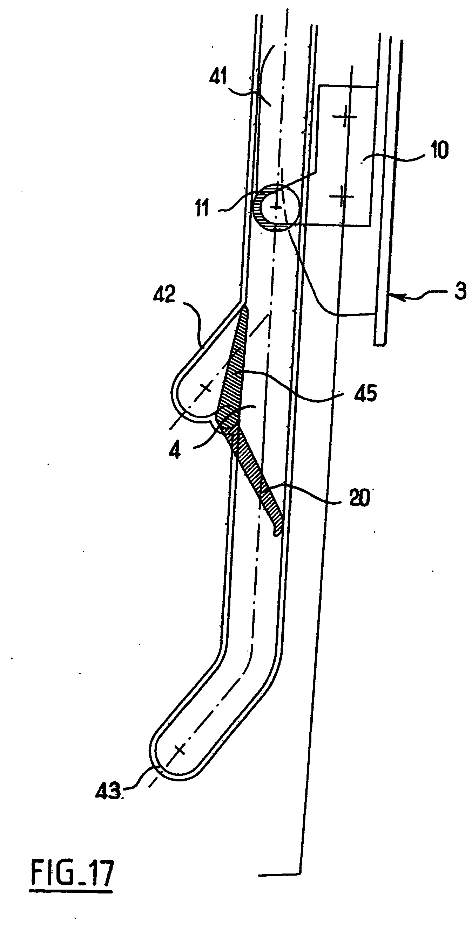

Le dispositif selon un mode préféré de réalisation de l'invention va maintenant être détaillé en référence aux figures 1 à 17. Les éléments équivalents représentés dans les différentes figures porteront les mêmes références numériques.

En référence à la figure 1, on a illustré l'arrière d'une carrosserie de véhicule 1 de type utilitaire. La face arrière de cette carrosserie de véhicule 1 présente une ouverture 2 pour le chargement de marchandises dans la partie arrière du véhicule. La carrosserie de véhicule 1 comporte en outre un rideau 3 à lamelles apte à se déplacer le long de moyens de guidage 4.

Dans le mode de réalisation illustré à la figure 1, les moyens de guidage 4 comprennent deux rails de guidage parallèles et situés de part et d'autre de l'ouverture 2.

Chaque rail de guidage est une glissière profilée en forme de U pour un observateur regardant le rail depuis une de ses extrémités.

Le rideau à lamelles permet, en position fermée, d'obturer l'ouverture 2. En position ouverte, le rideau à lamelles est escamoté sur le toit du véhicule pour rendre accessible l'intérieur du véhicule à travers l'ouverture 2. Lorsque le rideau est escamoté sur le toit, la majeure partie des lamelles du rideau lamellaire 3 est stockée dans un plan horizontal. Le lecteur aura compris que l'expression « majeure partie » est employée ici car la dernière (ou les dernières lamelles) du rideau à lamelles 3 peut (peuvent) ne pas appartenir au plan horizontal.

Le rideau 3 comporte une succession de lamelles dont le nombre peut varier en fonction des dimensions de chaque lamelle et de l'ouverture 2. Chaque lamelle a une forme plane et rectangulaire en vue de face. Les bords des lamelles s'étendent en coïncidence les uns avec les autres. Les lamelles ont toutes une même longueur mesurée suivant la direction transversale horizontale du véhicule. Les lamelles peuvent avoir différentes largeurs mesurées suivant la direction transversale verticale du véhicule.

Les lamelles du rideau 3 sont reliées les unes aux autres. En effet, le rideau 3 comprend pour chaque couple de lamelles consécutives une charnière. Cette charnière permet au rideau de se déformer lorsqu'il coulisse le long des moyens de guidage 4, et est placée de sorte que le pivotement entre deux lamelles consécutives n'est autorisé que dans un sens de rotation à partir d'une position coplanaire de lamelles. On remarque sur la figure 2 que les moyens de guidage 4, le long desquels le rideau 3 est apte à se déplacer, s'étendent verticalement autour de l'ouverture 2 et horizontalement sur une portion du toit 6 de la carrosserie de véhicule 1.

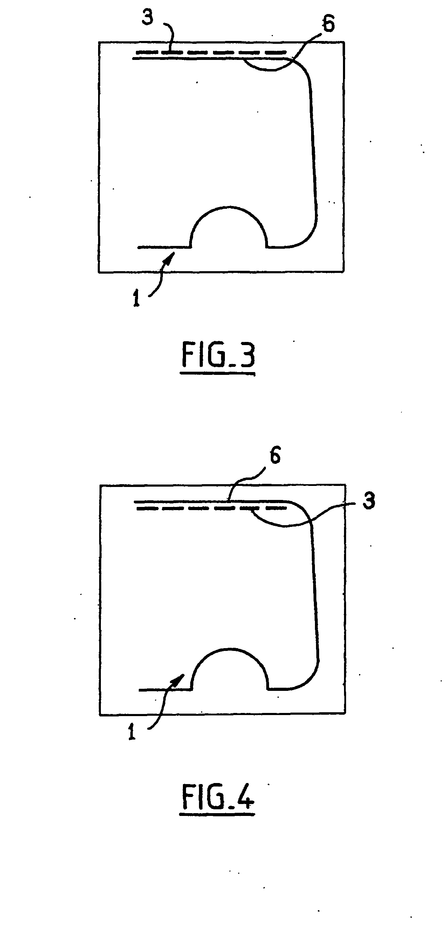

Dans la présente description, la carrosserie de véhicule 1 comprend un rideau 3 arrière à lamelles s'ouvrant vers le haut. La carrosserie de véhicule 1 pourrait alternativement comprendre un autre type d'ouvrant qu'un ouvrant arrière, par exemple un panneau latéral à rideau. Par ailleurs, dans la présente description et comme illustré à la figure 3, les lamelles du rideau sont reliées et stockées au dessus du toit 6 de la carrosserie de véhicule 1 en position ouverte.

Alternativement, et comme illustré à la figure 4, les lamelles du rideau 3 pourraient être reliées et stockées en dessous du toit 6 de la carrosserie de véhicule 1 en position ouverte.

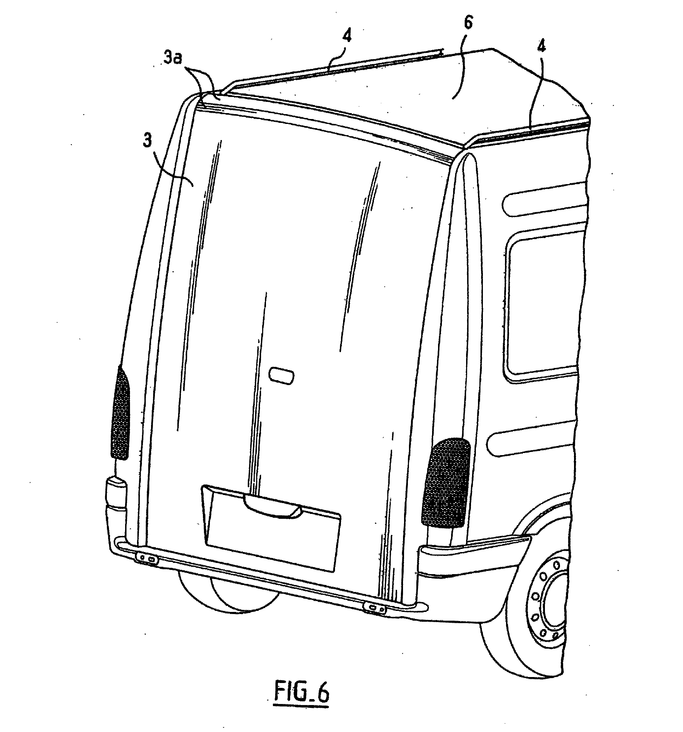

Le principe de fonctionnement de l'ouverture et de la fermeture du rideau 3 va maintenant être décrit en référence aux figures 6, 7, et 8 qui illustrent l'arrière d'un véhicule utilitaire comprenant la carrosserie de véhicule de la figure 1. L'ouverture et la fermeture du rideau pourront être pilotées par un moteur ou bien manuellement en actionnant un moyen d'actionnement (non représentés) connu de l'homme de l'art tel qu'un bouton de télécommande ou une poignée.

En position fermée et comme illustré à la figure 6, le rideau se situe dans un plan vertical. Le lecteur aura compris que certaines lamelles 3a parmi les lamelles les plus hautes peuvent ne pas appartenir au dit plan vertical. Dans tous les cas, en position fermée, la majeure partie des lamelles du rideau 3 est située dans le plan vertical.

Pour ouvrir le rideau, l'utilisateur actionne les moyens d'actionnement et déplace, par exemple manuellement, le rideau 3.

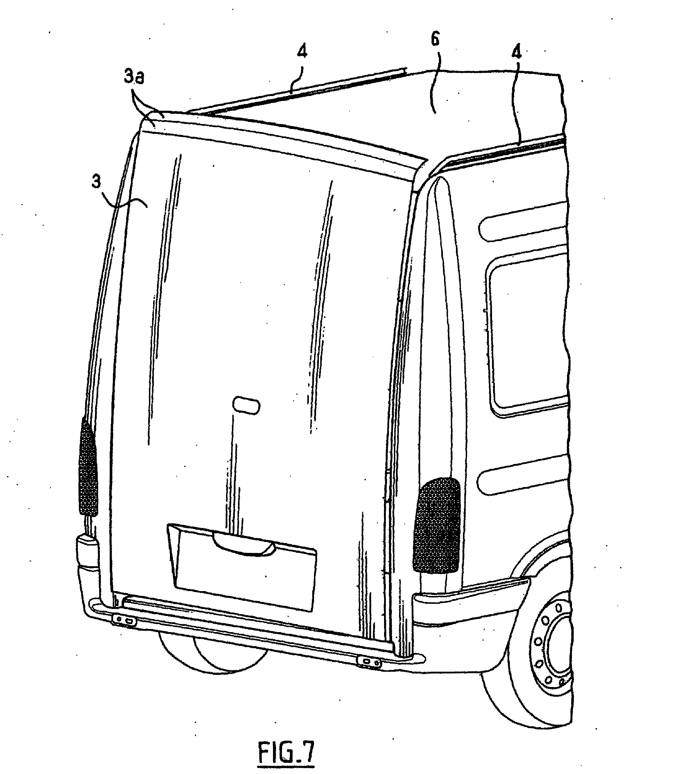

Le rideau 3 effectue alors un premier mouvement de translation suivant une direction non parallèle au plan en position fermée (plan vertical) comme illustré à la figure 7. Ce premier mouvement du rideau 3 permet de décoller celui-ci du joint d'étanchéité porté par la carrosserie et situé sur les bords de l'ouverture 2.

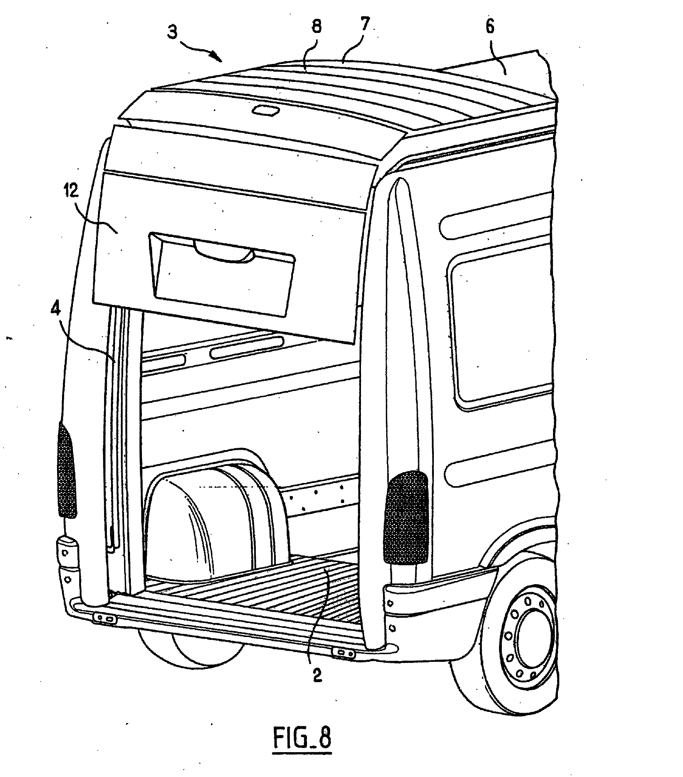

Le rideau 3 effectue ensuite un second mouvement de coulissement le long des moyens de guidage 4 pour passer en position ouverte comme illustré à la figure 8. Ce mouvement est classique et commun aux systèmes de rideaux lamellaires de l'art antérieur.

Un tel rideau a pour intérêt qu'il ne requiert pas de place derrière le véhicule pour l'ouverture comme le feraient des portes battantes. Un tel rideau assure une protection de l'intérieur du véhicule à l'eau, au gaz, à l'égard des vols, ainsi qu'au plan acoustique.

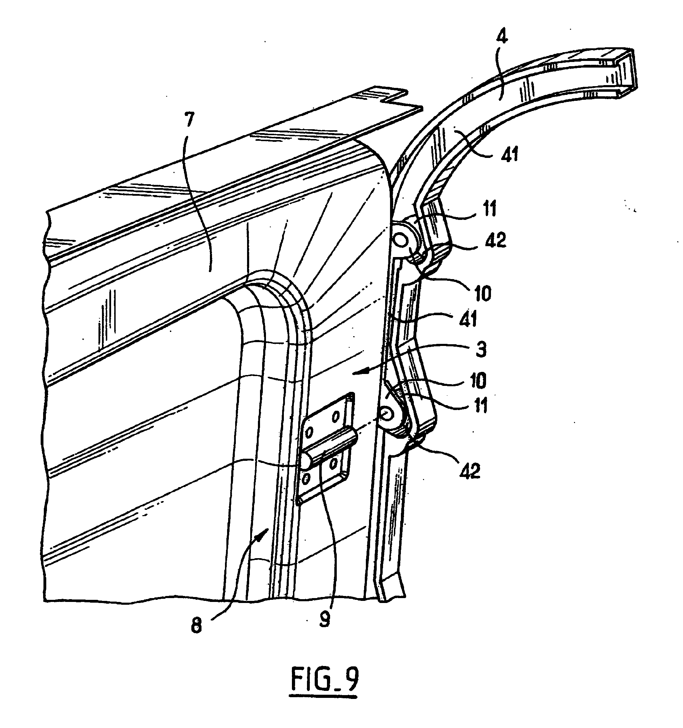

Les figures 9 à 17 illustrent plus en détail un mode de réalisation d'une carrosserie de véhicule selon l'invention.

Pour des raisons de clarté, nous ne décrirons qu'un seul des deux moyens de guidage (ainsi que les autres moyens associés), les deux moyens de guidage étant identiques et disposés sur le véhicule symétriquement par rapport au plan sagittal du véhicule.

La figure 9 est une vue en perspective selon un plan oblique par rapport à un plan de symétrie vertical longitudinal de l'arrière du véhicule, à l'intérieur du véhicule.

La lamelle supérieure 7 du rideau à lamelles 3 est liée à pivotement à la lamelle 8 située en dessous de la lamelle supérieure 7 grâce à deux charnières 9 dont une seule est illustrée, l'autre des deux charnières 9 étant située sur la carrosserie symétriquement par rapport au plan sagittal du véhicule.

Les autres lamelles successives du rideau 3 sont également liées grâce à deux charnières.

Alternativement les lamelles successives peuvent être liées entre elles grâce à une seule charnière ou plus de deux charnières.

Les lamelles du rideau 3 sont fixées à des moyens de support 10.

Chaque lamelle du rideau 3 est liée à au moins deux moyens de support 10, chacun des moyens de support comprenant un galet 11.

Le nombre de moyens de support 10 par lamelle peut varier le long du rideau 3. Par exemple, dans le mode de réalisation illustré à la figure 9, la lamelle supérieure 7 est fixée à quatre moyens de support 10 (dont deux seulement sont illustrés à la figure 9) alors que les lamelles suivantes du rideau 3 sont fixées à deux moyens de support 10 (dont un seul est illustré à la figure 9).

Les quatre moyens de support 10 sont fixés à la lamelle supérieure 7 de manière à maintenir la surface intérieure de la lamelle 7 à une distance suffisante du reste de la carrosserie. Ainsi, la présence des quatre moyens de support 10 sur la lamelle supérieure 7 permet d'éviter que l'une des extrémités de la lamelle n'entre en contact avec le reste de la carrosserie lors du déplacement du rideau 3, ce qui risquerait de détériorer (rayer, érafler,...) la carrosserie.

Pour chacune des lamelles suivantes, cette fonction est remplie par la combinaison des moyens de support 10 et des charnières 9 associés à chaque lamelle.

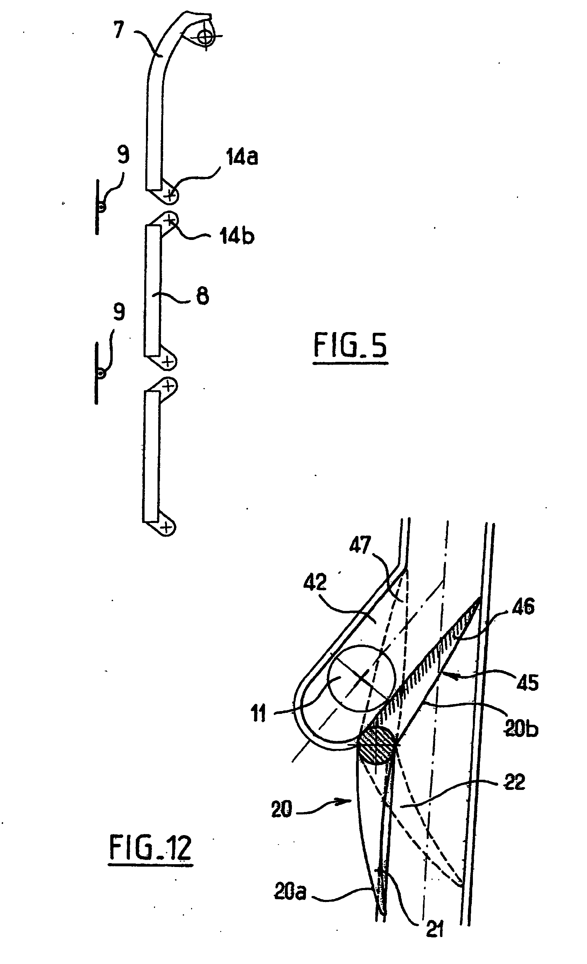

En référence à la figure 5, on a illustré le principe d'articulation et de guidage de deux lamelles successives. Dans le cas de la figure 5, ce principe est illustré relativement à la lamelle supérieure 7 et à la lamelle 8 directement située en dessous de la lamelle supérieure 7.

L'axe 14a de la lamelle supérieure et l'axe 14b de la lamelle 8 située en dessous de la lamelle supérieure 7 sont confondus, et l'axe de rotation des lamelles est confondu avec l'axe de la charnière 9 disposée entre les deux lamelles. Ceci permet une bonne rotation des lamelles.

Les moyens de support 10 coopèrent avec les moyens de guidage 4.

Les moyens de guidage 4 comprennent deux rails de guidage dont un seul est illustré sur la figure 9, le deuxième rail de guidage étant située sur la carrosserie symétriquement par rapport au plan sagittal du véhicule

Le rail de guidage illustré aux figures 9 et suivantes comprend une branche principale 41 et une pluralité de branches secondaires 42.

Les branches secondaires 42 sont destinées à recevoir les galets 11 des moyens de support 10 lorsque le rideau 3 est en position fermée. En d'autres termes, les branches secondaires 42 jouent le rôle de logements de blocage des moyens de support 10 des lamelles autres que la lamelle inférieure 12.

Les branches secondaires 42 s'étendent vers l'intérieur et vers le bas du véhicule. Les branches secondaires 42 sont disposées obliquement le long de la portion verticale des moyens de guidage 4.

Par ailleurs, l'inclinaison entre la branche principale 41 et les branches secondaires 42 est prévue suffisante pour conserver au mieux l'inertie du rideau 3 lors de la fermeture pour enclencher des moyens de verrouillage du rideau - tel qu'une serrure - et assurer un bon placage du rideau 3 sur la totalité d'un joint d'étanchéité situé autour de l'ouverture 2 du véhicule.

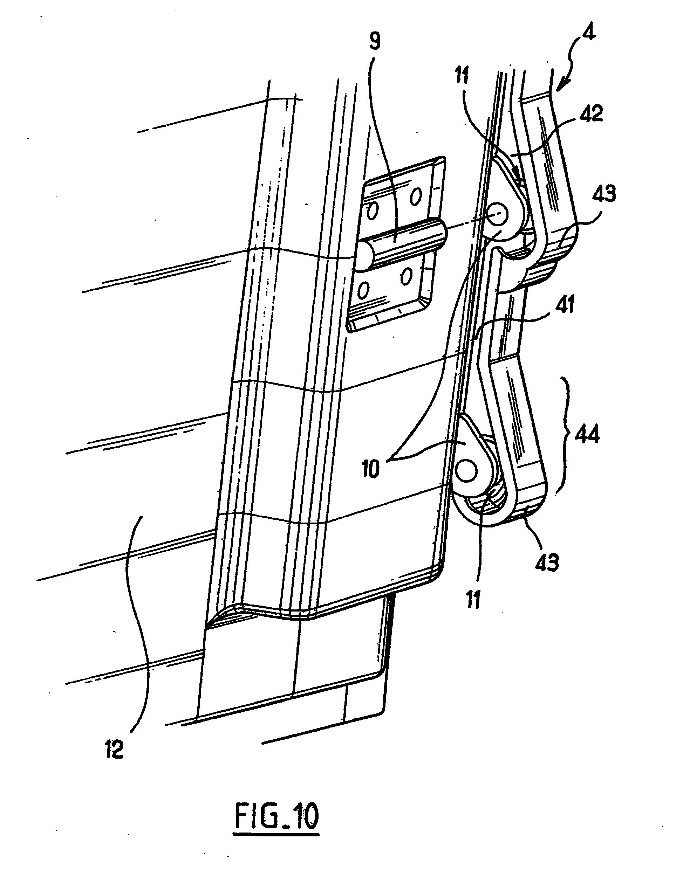

Chaque branche secondaire 42 comprend des moyens d'arrêt 43 à son extrémité distale de la branche principale 41 comme illustré à la figure 10 qui représente la partie inférieure de l'arrière du véhicule illustrée à la figure 9.

La banche principale 41 comprend une portion oblique 44 à son extrémité inférieure, et des moyens d'arrêt 43 à l'extrémité de la portion oblique 44. Cette portion oblique 44 s'étend selon la même direction et présente la même fonction que les branches secondaires 42.

En effet, la portion oblique 44 est apte à recevoir le galet des moyens de support de la lamelle inférieure 12 du rideau 3, et jouent le rôle de logement de blocage des moyens de support 10 de la lamelle inférieure 12. Les portions obliques de la branche principale ayant la même fonction que les branches secondaire, celles-ci sont considérées dans la présente comme des branches secondaires.

Les moyens d'arrêt 43 permettent d'empêcher que les moyens de support 10 ne puissent sortir du rail de guidage 4.

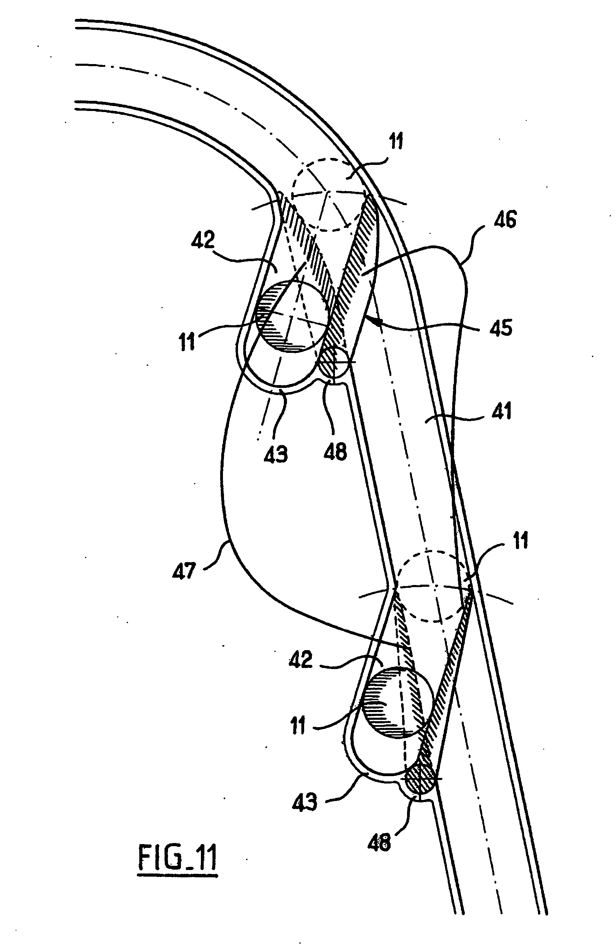

Comme illustré à la figure 11, la carrosserie de véhicule comprend également des moyens d'aiguillage 45 pour aiguiller les moyens de support 10 vers la branche principale 41 ou vers les branches secondaires 42.

Les moyens d'aiguillage permettent de faciliter le déplacement en deux mouvements du rideau par l'aiguillage des moyens de support 10 vers la branche principale 41 ou vers les branches secondaires 42.

Les moyens d'aiguillage 45 comprennent par exemple des volets d'aiguillage.

Les moyens d'aiguillage 45 sont disposés aux embranchements entre la branche principale 41 et les branches secondaires 42.

Les moyens d'aiguillage 45 sont liés à pivotement aux moyens de guidage 4, les liaisons pivot étant situées dans la partie basse 48 de chaque embranchement. Pour chaque volet d'aiguillage, l'extrémité opposée à sa liaison pivot s'étend vers le haut.

Les moyens d'aiguillage 45 sont aptes à se déplacer à pivotement entre une première position 46 (volets représentés en traits pleins) et une deuxième position 47 (volets représentés en traits pointillés).

Les moyens d'aiguillages sont liés entre eux grâce à des moyens permettant de coordonner le déplacement des volets d'aiguillage de sorte que tous les volets se déplacent simultanément depuis la première position 46 vers la deuxième position 47 et inversement.

Les moyens permettant de coordonner le déplacement des volets d'aiguillage sont par exemple un câble, une tige, ou tout autre moyen connu de l'homme de l'art.

Lorsque les moyens d'aiguillage 45 sont dans la première position 46, les moyens de support 10 sont aiguillés vers les branches secondaires 42 (ceci est illustré par les galets 11 en traits pleins sur la figure 11). Lorsque les moyens d'aiguillage 45 sont dans la deuxième position 47, les moyens de support 10 sont aiguillés vers la branche principale 41 (ceci est illustré par les galets 11 en traits pointillés sur la figure 11).

Ainsi, la sélection de la direction que doivent prendre les galets 11 des moyens de support 10 se fait par aiguillage grâce aux moyens d'aiguillage 45 qui viennent ouvrir ou fermer le passage vers les branches secondaires 42.

Les moyens d'aiguillage 45 comprennent des ressorts de rappel qui contraignent les volets d'aiguillage dans la deuxième position 47. L'application d'une force sur l'un quelconque des volets d'aiguillage pour contraindre le volet dans la première position entraîne le déplacement de l'ensemble des volets d'aiguillage dans la première position.

Le déplacement des moyens d'aiguillage 45 depuis la deuxième position 47 jusqu'à la première position est commandé par des moyens de commande 20.

Il sera entendu que la face avant d'un volet correspond à la face du volet la plus proche de l'avant du véhicule. Inversement, la face arrière d'un volet sera entendue comme étant la face la plus éloignée de l'avant du véhicule.

La figure 12 illustre un mode de réalisation des moyens de commande 20 associés au rail de guidage illustré à la figure 9.

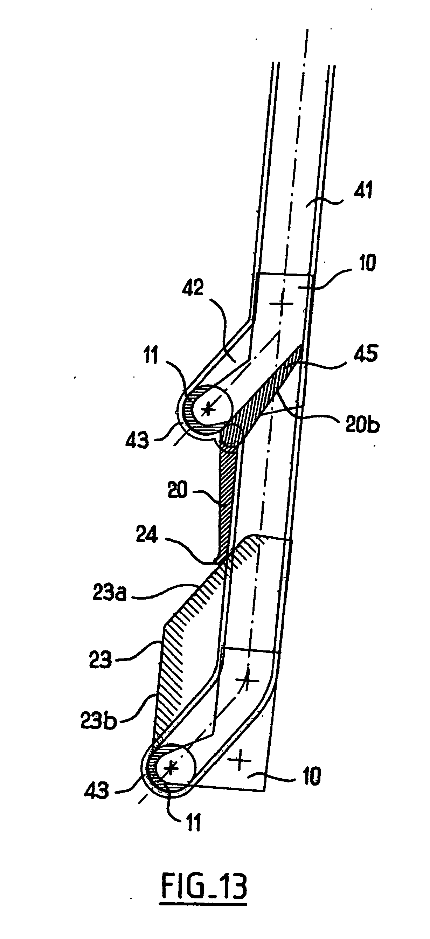

Ces moyens de commande 20 comprennent un volet de commande (figure 13).

Le volet de commande est muni d'une aile inférieure 20a et d'une aile supérieure 20b. L'angle formé par la face avant de l'aile supérieure 20b et la face arrière de l'aile inférieure 20a est égale à l'angle formé par la branche principale 41 et les branches secondaires 42. L'aile supérieure 20b est un moyen d'aiguillage de galet de la lamelle située au dessus de la lamelle inférieure 12.

Le volet de commande est lié à pivotement au rail de guidage. Pour chaque volet de commande, l'extrémité opposée à sa liaison pivot s'étend vers le bas.

Dans le mode de réalisation illustré à la figure 12, le volet de commande est fixé au volet d'aiguillage inférieur. En d'autres termes, le volet de commande est fixé au volet d'aiguillage le plus éloigné du toit 6 de la carrosserie.

Les moyens de commande 20 sont aptes à se déplacer à pivotement entre une première position 21 (volets représentés en traits pleins) et une deuxième position 22 (volets représentés en traits pointillés).

Le déplacement des moyens de commande 20 entre les première et deuxième positions 21, 22 commande le déplacement simultané des moyens d'aiguillage 45 entre les première et la première positions 46, 47.

Le déplacement des moyens de commande dans la première position 21 commande le déplacement des moyens d'aiguillage 45 dans la première position 46 (ceci est illustré par les positions 21, 46 en traits pleins sur la figure 12). Le déplacement des moyens de commande 20 dans la deuxième position 22 commande le déplacement des moyens d'aiguillage 45 dans la deuxième position 47 (ceci est illustré par les positions 22, 47 en traits pointillés sur la figure 12).

Les moyens de commande 20 comprennent un ressort de rappel qui contraint le volet de commande dans la deuxième position 22.

Le déplacement des moyens de commande 20 depuis la deuxième position 22 jusqu'à la première position est induit par l'action d'une came 23 comme illustré sur la figure 13.

La came 13 est fixée aux moyens de support 10 de la lamelle inférieure 12.

Alternativement, la came peut être indépendante des moyens de support. Par exemple, la came peut être fixée directement sur la dernière lamelle du rideau 3.

Le chemin de came de la came 23 comprend une portion inclinée 23a et une portion verticale 23b. L'inclinaison de la portion inclinée 23a du chemin de came est identique à l'inclinaison des branches secondaires 42.

Le principe de fonctionnement du rideau à lamelles 3 selon l'invention va maintenant être décrit en référence aux figures 13 à 17.

En position fermée (figure 13), les moyens de support 10 sont logés dans les branches secondaires 42 des moyens de guidage, les galets 11 des moyens de support 10 étant sensiblement en butée sur les moyens d'arrêt 43. Quand les galets 11 sont dans une position proche de la butée sur les moyens d'arrêt 43, c'est-à-dire qu'un jeu est présent entre les galets 11 et les moyens d'arrêt 43, alors tout le poids du rideau permet la compression du joint au bénéfice de l'étanchéité.

La portion inclinée de la came 23 est en contact avec les moyens de commande 20. Plus précisément, la came 23 est en appui glissant avec l'extrémité 24 du volet de commande. Ceci permet de maintenir le volet de commande dans la première position 46.

Le lecteur appréciera que l'extrémité libre du volet de commande est recourbée pour mieux répartir les forces exercées par la came.

Le maintien des moyens de commande dans leur première position 21 commande le maintien des moyens d'aiguillage 45 dans leur première position 46.

Pour ouvrir le rideau 3, l'utilisateur actionne les moyens d'actionnement et déplace par exemple manuellement le rideau 3.

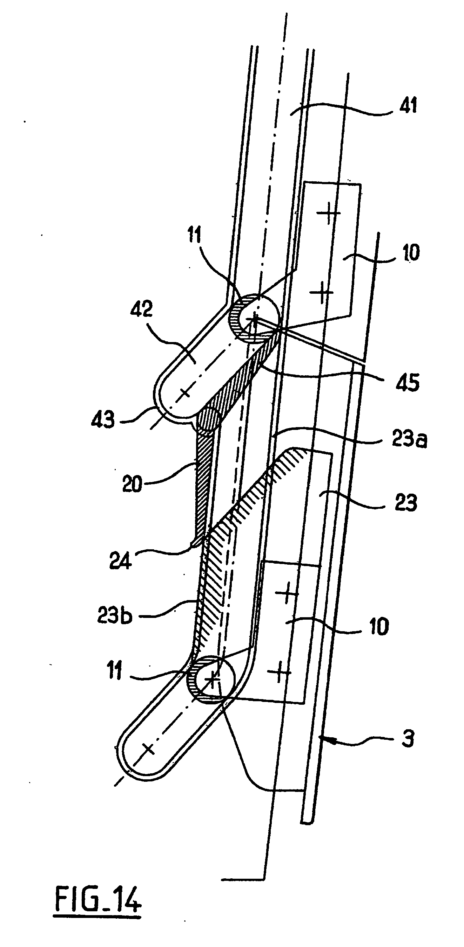

Comme illustré à la figure 14, les galets 11 des moyens de support 10 roulent dans les branches secondaires 42 des moyens de guidage 4 jusqu'aux embranchements entre la branche principale 41 et les branches secondaires 42, ce qui induit un mouvement de translation du rideau 3 selon une direction non parallèle au plan en position fermée.

Durant leur déplacement depuis la position fermée jusqu'aux embranchements, les galets roulent sur les faces avant des volets d'aiguillage de sorte qu'il sont aiguillés vers la branche principale 41.

Durant ce déplacement, la portion inclinée 23a de la came 23 glisse sur l'extrémité inférieure du volet de commande.

Le rideau 3 effectue ensuite un mouvement de coulissement le long des moyens de guidage 4.

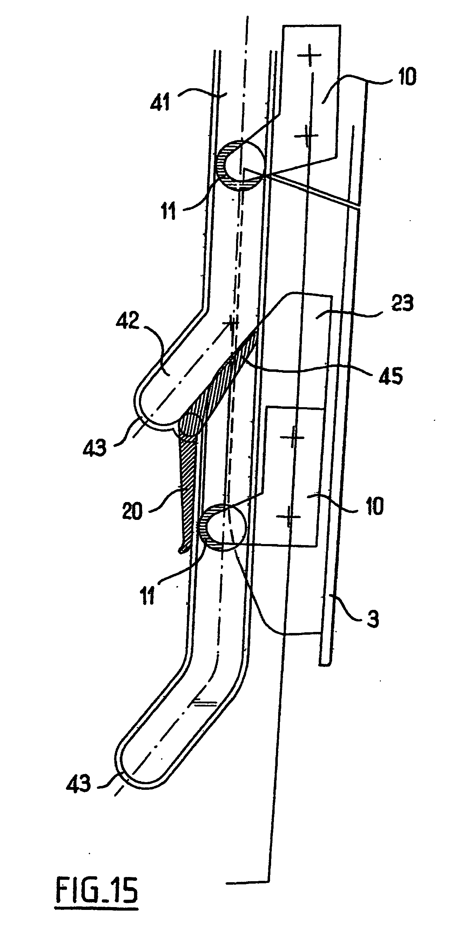

Comme illustré à la figure 15, les galets 11 des moyens de support 10 roulent dans la branche principale 41 des moyens de guidage 4.

La portion verticale 23b du chemin de came glisse sur la face arrière du volet de commande, de sorte que le volet de commande est toujours contraint dans sa première position.

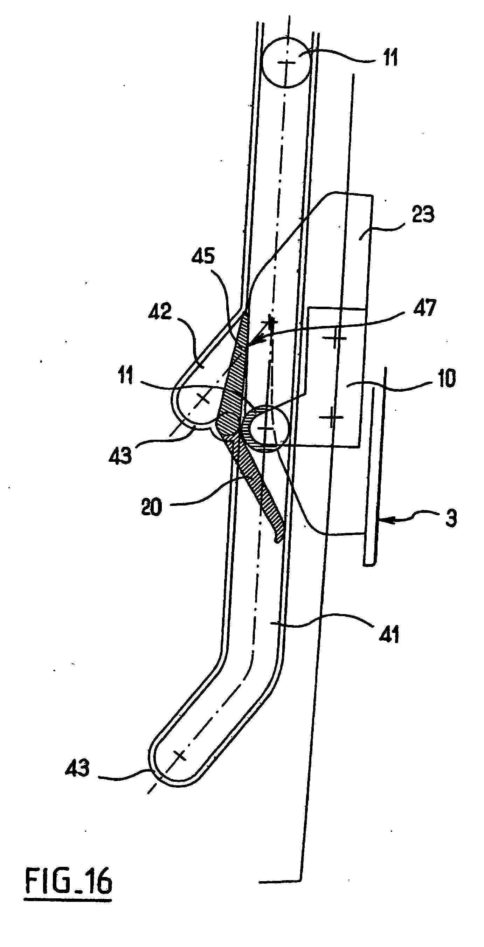

Comme illustré à la figure 16, lorsque l'axe de rotation du galet 11 des moyens de support 10 fixés à la lamelle inférieure 12 est situé au dessus du plan horizontal passant par l'axe de rotation des moyens de commande 20, la came 23 n'est plus en contact avec les moyens de commande 20.

Les moyens de commande 20 se déplacent depuis la première position vers la deuxième position sous l'action d'un ressort de rappel associé aux moyens de commande.

Le déplacement des moyens de commande 20 depuis la première position 21 vers la deuxième position 22 commande le déplacement des moyens d'aiguillage 45 de leur première position 46 vers leur deuxième position 47.

Les galets 11 des moyens de support 10 roulent sur les faces arrière des volets d'aiguillage 45.

Les moyens d'aiguillage et de commande 20, 45 sont maintenus dans leur deuxième position 22, 47 par leur ressort de rappel respectif durant tout le reste du mouvement de coulissement du rideau 3.

Le principe de fonctionnement du rideau est similaire lors de la fermeture de celui-ci.

En position ouverte, les moyens de commande 20 et d'aiguillage 45 sont dans leurs deuxièmes positions 22, 47.

Lors de la fermeture, les galets 11 des moyens de support 10 roulent dans les moyens de guidage et sur les faces arrière des moyens d'aiguillage au niveau des embranchements entre la branche principale et les branches secondaires.

Lorsque les axes de rotation du galet des moyens de support fixé à la lamelle inférieure 12 du rideau 3 arrivent au niveau du plan horizontal comprenant l'axe de rotation des moyens de commande, la came 23 vient en contact avec les moyens de commande 20 et impose une contrainte sur les moyens de commande 20 qui tend à les déplacer dans leur première position 21.

Le déplacement des moyens de commande dans leur première position commande le déplacement des moyens d'aiguillage dans leur première position : les moyens de support sont ainsi aiguillés vers les branches secondaire.

Les galets 11 des moyens de support 10 roulent dans les branches secondaires 42 jusqu'à venir sensiblement en butée contre les moyens d'arrêt 43 : le rideau est dans la position fermée.

## Revendications

1. Carrosserie de véhicule comprenant un rideau (3) à lamelles, des moyens de support (10) du rideau (3), et des moyens de guidage (4) du rideau (3) entre une position ouverte et une position fermée, les moyens de guidage (4) comprenant une branche principale (41) et une pluralité de branches secondaires (42), les moyens de support (10) coopérant avec les branches secondaires (42) en position fermée et avec la branche principale (41) en position ouverte,
**caractérisé en ce que**,
la carrosserie de véhicule comprend en outre des moyens d'aiguillage (45) liés à pivotement aux moyens de guidage (4) pour aiguiller les moyens de support (10) vers la branche principale (41) ou vers les branches secondaires (42).

2. Carrosserie de véhicule selon la revendication 2, **caractérisée en ce qu'**elle comprend en outre des moyens de commande (20) pour commander le déplacement des moyens d'aiguillage (45) entre une deuxième position (47) où les moyens de support (10) sont aiguillés vers la branche principale (41) et une première position (46) où les moyens de support (10) sont aiguillés vers les branches secondaires (42).

3. Carrosserie de véhicule selon l'une des revendications 1 ou 2, **caractérisée en ce qu'**elle comprend en outre une came (23) apte à coopérer avec les moyens de commande (20).

4. Carrosserie de véhicule selon la revendication précédente, **caractérisée en ce que** la came (23) est fixée aux moyens de support (10) de la lamelle du rideau la plus basse (12) lorsque le rideau (3) est en position fermée.

5. Carrosserie de véhicule selon l'une des revendications précédentes, **caractérisée en ce que** les moyens de support (10) comprennent respectivement au moins un galet (11).

6. Carrosserie de véhicule selon l'une des revendications 2 à 5, **caractérisée en ce que** les moyens d'aiguillage (45) comprennent des volets d'aiguillage, et les moyens de commande (20) comprennent un volet de commande.

7. Carrosserie de véhicule selon l'une des revendications précédentes, **caractérisée en ce que** les moyens de guidage (4) -comprennent deux rails de guidage opposés le long desquels le rideau (3) est apte à se déplacer.

8. Carrosserie de véhicule selon l'une des revendications précédentes, **caractérisée en ce que** chaque lamelle du rideau (3) est fixée à au moins un moyen de support (10) respectif.

## Claims

1. Vehicle bodywork comprising a slatted curtain (3), means (10) for supporting the curtain (3), and means (4) for guiding the curtain (3) between an open position and a closed position, the guidance means (4) comprising a main branch (41) and a plurality of secondary branches (42), the supporting means (10) interacting with the secondary branches (42) in the closed position and with the main branch (41) in the open position,
**characterized in that**:
the vehicle bodywork also comprises switching means (45) pivotingly connected to the guidance means (4) in order to switch the supporting means (10) to the main branch (41) or to the secondary branches (42).

2. Vehicle bodywork according to Claim 2,
**characterized in that** it also comprises control means (20) for controlling the movement of the switching means (45) between a second position (47) in which the supporting means (10) are switched to the main branch (41) and a first position (46) in which the supporting means (10) are switched to the secondary branches (42).

3. Vehicle bodywork according to one of Claims 1 or 2, **characterized in that** it also comprises a cam (23) capable of interacting with the control means (20) .

4. Vehicle bodywork according to the preceding claim, **characterized in that** the cam (23) is attached to the supporting means (10) of the lowest slat (12) when the curtain (3) is in the closed position.

5. Vehicle bodywork according to one of the preceding claims, **characterized in that** the supporting means (10) comprise respectively at least one roller (11).

6. Vehicle bodywork according to one of Claims 2 to 5, **characterized in that** the switching means (45) comprise switching flaps, and the control means (20) comprise a control flap.

7. Vehicle bodywork according to one of the preceding claims, **characterized in that** the guidance means (4) comprise two opposite guide rails along which the curtain (3) is capable of moving.

8. Vehicle bodywork according to one of the preceding claims, **characterized in that** each slat of the curtain (3) is attached to at least one respective supporting means (10).

## Patentansprüche

1. Fahrzeugkarosserie, umfassend einen Lamellenrollladen (3), Tragmittel (10) des Rollladens (3) und Führungsmittel (4) des Rollladens (3) zwischen einer geöffneten Position und einer geschlossenen Position, wobei die Führungsmittel (4) einen Hauptzweig (41) und eine Vielzahl von Nebenzweigen (42) aufweisen, wobei die Tragmittel (10) in der geschlossenen Position mit den Nebenzweigen (42) und in der geöffneten Position mit dem Hauptzweig (41) zusammenwirken,
**dadurch gekennzeichnet, dass**
die Fahrzeugkarosserie außerdem Umstellmittel (45) aufweist, die schwenkbar mit den Führungsmitteln (4) verbunden sind, um die Tragmittel (10) zum Hauptzweig (41) oder zu den Nebenzweigen (42) umzustellen.

2. Fahrzeugkarosserie nach Anspruch 2, **dadurch gekennzeichnet, dass** sie außerdem Steuermittel (20) umfasst, um die Bewegung der Umstellmittel (45) zwischen einer zweiten Position (47), wo die Tragmittel (10) zum Hauptzweig (41) gestellt sind, und einer ersten Position (46), wo die Tragmittel (10) zu den Nebenzweigen (42) gestellt sind, umzustellen.

3. Fahrzeugkarosserie nach Anspruch 1 oder 2, **dadurch gekennzeichnet, dass** sie außerdem einen Nocken (23) aufweist, der in der Lage ist, mit den Steuermitteln (20) zusammenwirken.

4. Fahrzeugkarosserie nach dem vorherigen Anspruch, **dadurch gekennzeichnet, dass** der Nocken (23) an den Tragmitteln (10) der untersten Rollladenlamelle (12) befestigt ist, wenn der Rollladen (3) in der geschlossenen Position ist.

5. Fahrzeugkarosserie nach einem der vorherigen Ansprüche, **dadurch gekennzeichnet, dass** die Tragmittel (10) jeweils mindestens eine Leitrolle (11) aufweisen.

6. Fahrzeugkarosserie nach einem der Ansprüche 2 bis 5, **dadurch gekennzeichnet, dass** die Umstellmittel (45) Umstellklappen aufweisen und die Steuermittel (20) eine Steuerklappe aufweisen.

7. Fahrzeugkarosserie nach einem der vorherigen Ansprüche, **dadurch gekennzeichnet, dass** die Führungsmittel (4) zwei gegenüberliegende Führungsschienen aufweisen, an denen entlang der Rollladen (3) sich verschieben kann.

8. Fahrzeugkarosserie nach einem der vorherigen Ansprüche, **dadurch gekennzeichnet, dass** jede Rollladenlamelle (3) an mindestens einem jeweiligen Tragmittel (10) befestigt ist.
